# EUROPÄISCHE PATENTSCHRIFT

(11) **EP 3 167 948 B1**
(45) Veröffentlichungstag und Bekanntmachung des Hinweises auf die Patenterteilung: **20.07.2022**
(21) Anmeldenummer: 16192585.4
(22) Anmeldetag: 02.03.2015
(51) Int. Cl.: B01D 45/08

(54) **REINIGUNGSMODUL**
SEPARATION SYSTEM FOR PAINT OVERSPRAY
DISPOSITIF POUR ELIMINER DES EXCES DE PEINTURE HUMIDE

(30) Priorität: 07.04.2014 AT 2602014
(43) Veröffentlichungstag der Anmeldung: 17.05.2017
(62) Teilanmeldung aus: 15716973.1
(73) Patentinhaber: Brain Flash-Patententwicklungs GmbH, 9900 Lienz (AT)
(72) Erfinder: GAVRAN, Jadranko, 9900 Lienz (AT); EDER, Michael, 9900 Lienz (AT)
(74) Vertreter: Dilg, Haeusler, Schindelmann Patentanwaltsgesellschaft mbH

(56) Entgegenhaltungen:
- WO-A2-03/084638
- DE-U1-202007 013 656
- GB-A- 2 140 707
- US-A- 5 922 110

## Beschreibung

Die vorliegende Erfindung betrifft ein Set aus einem Hohlkörper zur Reinigung eines Luftstroms gemäß den Merkmalen des Oberbegriffs des Anspruchs 1.

Die modulare Anordnung von Filtermodulen aus Karton ist aus der WO 03/084638 A2 bekannt. Sie dienen der Abscheidung von Lackpartikeln bzw. von Lacknebel (overspray) aus einer Abluft einer Sprühkabine, in welcher beispielsweise Teile für ein KFZ lackiert werden.

Bemerkenswert ist hierbei, dass eine sehr große Vielzahl an verschiedenen Lacken verwendet wird. Dadurch sind in der Abluft von Sprühkabinen verschiedenste Arten von Lackverunreinigungen vorhanden, welche sich beispielsweise durch Partikelgröße und Feuchtigkeitsanteil unterscheiden. Für relativ kleine, trockene Partikel müssen zur Abscheidung Labyrinthe mit kleinen Öffnungen und starken Umlenkungen bereit gestellt werden, sodass die Partikel durch Ihre Trägheit (bzw. durch die Fliehkraft) an Prallwänden des Labyrinths bzw. des Abscheiders gestoppt werden, während die gereinigte Luft hinter dem Filtermodul austritt.

Bei großen Partikelgrößen mit hohem Feuchtigkeitsanteil kann über kurze Zeit eine große Menge von Lack in einem Reinigungsmodul abgeschieden werden. Insbesondere dann, wenn die Reinigungsmodule im Boden der Sprühkabine angeordnet sind, resultiert dies in eine große Belastung des aus Karton gefertigten Reinigungsmoduls, welche durch die Sogwirkung eines Gebläses zur Erzeugung des Luftstroms durch die Reinigungsmodule noch vergrößert wird. Dies führt bei Reinigungsmodulen nach dem Stand der Technik dazu, dass die darin vorhandenen 30 Abscheidestrukturen unter ihrem mit Lack beladenen Eigengewicht zusammenfallen und ihre Funktion nicht mehr erfüllen.

GB 2 140 707 A offenbart einen Prallabscheider mit einem langgestreckten Rohr mit rechteckigem Querschnitt, das aus Papier oder Pappe besteht und zum Aufbewahren flach gefaltet werden kann. Im Gebrauch bildet eine Anordnung solcher Rohre die Rückwand einer Spritzlackierkabine, aus der Luft angesaugt wird, die durch Einlässe in jedes Rohr strömt und durch Auslässe austritt. Die Einlässe können seitlich und/oder längs der Rohre angeordnet sein, um den Luftstrom abzulenken, oder das Rohr kann intern durch Wände mit Löchern geteilt sein, die relativ zu den Ein- und Auslässen versetzt sind.

US 5,922,110 A offenbart ein wasserlösliches, biologisch abbaubares Filtermedium zum Entfernen von mitgeführten festen und/oder flüssigen Partikeln aus einem Luftstrom und ein Verfahren zu dessen Verwendung. Das Filtermedium ist eine feste Lösung aus Stärke und einem biologisch abbaubaren, wasserlöslichen synthetischen Polymer. Nach Gebrauch wird das Filtermedium umweltgerecht entsorgt. Insbesondere wird das Filtermedium in Wasser gelöst und die darauf gesammelten festen und/oder flüssigen Partikel werden aus der resultierenden wässrigen Lösung von Stärke und Polymer durch Dekantieren entfernt und das Polymer und die Stärke unter Verwendung eines herkömmlichen biologischen Wasseraufbereitungsverfahrens biologisch abgebaut.

DE 20 2007 013 656 U offenbart ein Filtermodul für ein modular aufgebautes Filtergerät zum Filtern von Partikeln aus einer Medienströmung. Das Filtermodul weist ein kubischen Tragskelett auf, dass eine Medieneintrittsöffnung zum Einleiten der Strömung des ungefilterten Mediums und einer Medienaustrittsöffnung zum Ausleiten der Strömung des gefilterten Mediums aufweist. Das Filtermodul enthält ein Filtersystems, das von zumindest einem Filtereinsatz gebildet ist, der in einem Winkel zur Strömungsrichtung in einem Strömungskanal im Filtermodul angeordnet und in einem Schienensystem im Tragskelett gehalten ist. Das Schienensystem ist von zumindest einer oberen und zumindest einer unteren Querschiene gebildet und die Querschienen in Haltevorrichtungen des Tragskeletts sind derart gehalten, dass die Querschienen in Strömungsrichtung verschieb- oder versetzbar sind.

Aufgabe der Erfindung ist es, eine Abscheidestruktur, ein Reinigungsmodul, einen Einschubrahmen sowie ein Set aus einem Hohlkörper und Reinigungsteilstrukturen zu schaffen, welche einen verbreiterten Anwendungsbereich erlauben, d. h. zur Abscheidung von Lackpartikeln und Lacknebel mit größerer Vielfalt geeignet sind, als dies im Stand der Technik der Fall ist.

Diese Aufgabe wird durch ein Set aus einem Hohlkörper mit den Merkmalen des Anspruchs 1 gelöst.

Erfindungsgemäß geschieht dies, indem die Reinigungsstruktur wenigstens zwei voneinander gesonderte Reinigungsteilstrukturen aufweist, welche über ein Öffnungselement am Hohlkörper aus dem Hohlkörper entnehmbar und/oder im Hohlkörper anordenbar ist. Durch die Bereitstellung des erfindungsgemäßen Sets, in welchem zumindest zwei verschiedene Kombinationen von Reinigungsteilstrukturen im Hohlkörper anordenbar sind, kann eine noch breitere Anwendbarkeit erzielt werden.

Insbesondere kann es vorgesehen sein, dass Reinigungsteilstrukturen und/oder die Reinigungsmodule unabhängig voneinander austauschbar sind.

Weitere vorteilhafte Ausführungsformen sind in den abhängigen Ansprüchen definiert.

Um auch sehr feine Lacknebel aus dem Luftstrom entfernen zu können, kann es vorgesehen sein, dass die wenigstens zwei Reinigungsteilstrukturen eine Filterstruktur umfassen. Derartige Filterstrukturen können verschiedenartig ausgebildet sein. Beispielsweise kann hier eine Matte oder ein Flies aus Glasfasern zum Einsatz kommen. Bevorzugte Dicken solcher Matten oder Vliese liegen bevorzugt unter 20 cm und besonders bevorzugt unter 10 cm. Außerdem kann als Filtermaterial sogenanntes Columbusmaterial verwendet werden. Dieses besteht aus Papier, vorzugsweise Altpapier, in welches parallele und versetzte Schlitze gestanzt oder geschnitten sind. Durch Zug quer zu den Schlitzen entstehen Öffnungen. Mehrere Lagen dieses Materials können vorteilhaft als Filtermaterial verwendet werden.

Abscheidestrukturen können ebenfalls auf verschiedene Arten ausgestaltet sein. Beispielsweise können diese nach dem Auffalten in einer Draufsicht rechteckige Strukturen sein. Aber auch rautenförmige Strukturen sind bekannt (beispielsweise vertrieben unter der Bezeichnung "Andreae").

Erfindungsgemäße Reinigungsmodule können in Einschubrahmen angeordnet werden. Diese Einschubrahmen können sich über eine Wand, die Decke oder den Boden der Sprühkabine erstrecken. In diesen Einschubrahmen können die Reinigungsmodule hintereinander angeordnet und einzeln herausgenommen bzw. ersetzt werden.

Die zumindest zwei Reinigungsteilstrukturen können zumindest eine Abscheidestruktur zur Reinigung eines Luftstroms aufweisen, wobei die wenigstens eine Abscheidestruktur vorzugsweise wenigstens zwei, in Richtung des Luftstroms aufeinanderfolgende Prallwände, welche mit Öffnungen versehen sind, umfasst.

Der Abscheidestruktur kann durch das Vorsehen zumindest einer Stabilisierungswand eine erhöhte Stabilität verliehen werden.

Es kann vorgesehen sein, dass die wenigstens eine Stabilisierungswand mit den wenigstens zwei Prallwänden in Verbindung steht.

Es kann außerdem vorgesehen sein, dass die wenigstens eine Stabilisierungswand mit den wenigstens zwei Prallwänden faltbar und/oder gelenkig in Verbindung steht.

Des Weiteren kann vorgesehen sein, dass die wenigstens eine Stabilisierungswand im Wesentlichen parallel zum Luftstrom ausgerichtet ist.

Bevorzugt vorgesehen können Abscheidestrukturen in verschiedenen geometrischen Abmessungen, insbesondere Stärken, vorgesehen sein.

Ebenso können erfindungsgemäß Abscheidestrukturen vorgesehen sein, welche, durch die Größe der Öffnungen, auf die Abscheidung von Partikeln unterschiedlicher Größe optimiert sind. Ferner können erfindungsgemäß die Abscheidestrukturen so gestaltet sein, dass diejenigen mit größeren geometrischen Abmessungen, insbesondere Stärken, auf die Abscheidung größerer Partikel optimiert sind und umgekehrt.

Dies ermöglicht eine genaue Anpassung des Reinigungsmoduls an die vorliegende Verschmutzung im Luftstrom (Partikelgröße, Feuchtigkeitsgrad). Dies ermöglicht außerdem ein selektives Tauschen von hintereinander angeordneten Reinigungsmodulen, was von Vorteil ist, da auf verschiedene Partikelgrößen optimierte Abscheidestrukturen unterschiedlich schnell ihre Kapazitätsgrenze erreichen.

Weiterhin von Vorteil ist, dass die durch die selektive Tauschbarkeit der Reinigungsmodule Lagerhaltung im geringeren Umfang notwendig ist.

Für einen guten Sitz der Reinigungsteilstrukturen im Hohlkörper kann es vorgesehen sein, dass die Reinigungsteilstrukturen in einer Ansicht entlang einer Achse, welche beim im Hohlkörper angeordneten Zustand, im Wesentlichen parallel zum Luftstrom ist, einen Umriss aufweisen, welcher einem, vorzugsweise zum Luftstrom senkrechten, Querschnitt eines Hohlraums des Hohlkörpers im Wesentlichen entspricht. Dies stellt außerdem sicher, dass kein Teilstrom des Luftstroms ungereinigt bleibt, weil kein Weg an den Reinigungsteilstrukturen vorbeiführt.

Besonders bevorzugt kann es vorgesehen sein, dass zumindest eine Abscheidestruktur zusammenfaltbar ist. Durch das verringerte Volumen wird die Lagerung und der Transport der Abscheidestrukturen erheblich erleichtert.

Dieser Effekt verstärkt sich noch, falls vorgesehen ist, dass die zumindest eine Abscheidestruktur nach dem Zusammenfalten im Wesentlichen flach ist.

Die verstärkende Wirkung einer Stabilisierungswand kann verbessert werden, indem das Zusammenfalten der Abscheidestruktur beim im Hohlkörper angeordneten Zustand durch Innenwandungen des Hohlkörpers gehemmt ist.

Bevorzugt kann es vorgesehen sein, dass die wenigstens eine Stabilisierungswand im Wesentlichen mittig bezüglich einer Richtung in der Ebene der Prallwände angeordnet ist. Dies kann die Verstärkungswirkung der Stabilisierungswand optimieren.

Die wenigstens eine Stabilisierungswand kann mit den wenigstens zwei Prallwänden verbunden sein, wobei dies vorzugsweise auf faltbare und/oder gelenkige Art und Weise der Fall ist. Einfach realisierbar ist dies beispielsweise über ein Filmscharnier. Dies ermöglicht eine sehr flache Struktur im zusammengefalteten Zustand, welche im entfalteten Zustand eine hohe Steifigkeit aufweist.

Weiterhin kann es bevorzugt vorgesehen sein, dass die wenigstens eine Stabilisierungswand im Wesentlichen parallel zum Luftstrom ausgerichtet ist. Denn insbesondere dann, wenn das Reinigungsmodul in einem Boden oder einer Decke einer Sprühkabine angeordnet ist, entspricht die Richtung des Luftstroms derjenigen Richtung der Hauptbelastung der Abscheidestruktur.

Ganz besonders bevorzugt kann es vorgesehen sein, dass der Hohlkörper und/oder zumindest eine Abscheidestruktur aus Karton, Papier oder Pappe besteht. Ein besonders einfaches Beseitigen bzw. Recyclen der Abscheidestrukturen bzw. der Reinigungsmodule wird hierdurch ermöglicht. Es ist aber durchaus auch denkbar Abscheidestrukturen und/oder Hohlkörper aus Metall, Kunststoff, Holz oder dergleichen zu fertigen.

In einer weiteren bevorzugten Ausführung kann vorgesehen sein, dass zumindest eine Abscheidestruktur wenigstens zwei im Wesentlichen parallel zum Luftstrom ausgerichtete Laschen aufweist, zwischen denen im Hohlkörper eine weitere Abscheidestruktur anordenbar ist. Dadurch ist es möglich, dass eine Abscheidestruktur für verschiedene vorgesehene geometrische Abmessungen, insbesondere Stärken, dient. Das bedeutet, sie kann entweder mit einer zwischen den Laschen angeordneten Abscheidestruktur eingesetzt werden, oder ohne. In letzterem Fall dienen die Laschen als Abstandhalter zu einer Innenwandung des Hohlkörpers oder einer weiteren Abscheidestruktur.

Weitere Vorteile und Einzelheiten der Erfindung sind anhand der Figuren, sowie der dazugehörigen Figurenbeschreibung ersichtlich. Dabei zeigen:
- Fig. 1a bis 1h: verschiedene perspektivische, schematische Darstellungen erfindungsgemäßer Reinigungsmodule,
- Fig. 2a bis 2h: perspektivische Darstellungen einer erfindungsgemäßen Abscheidestruktur in verschiedenen Faltzuständen,
- Fig. 3a bis 3c: eine weitere Ausführungsform einer erfindungsgemäßen Abscheidestruktur in verschiedenen Faltzuständen
- Fig. 4a und 4b: schematische Darstellungen verschiedener Kombinationsmöglichkeiten von erfindungsgemäßen Abscheidestrukturen in Reinigungsmodulen, sowie
- Fig. 5a bis 5e: Darstellungen von Anordnungsmöglichkeiten von erfindungsgemäßen Reinigungsmodulen in Einschubrahmen.

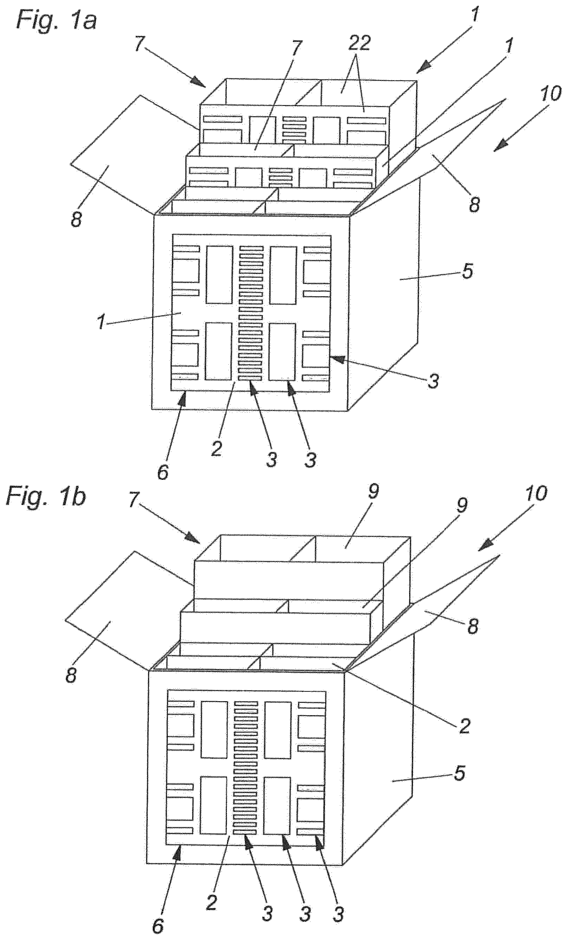

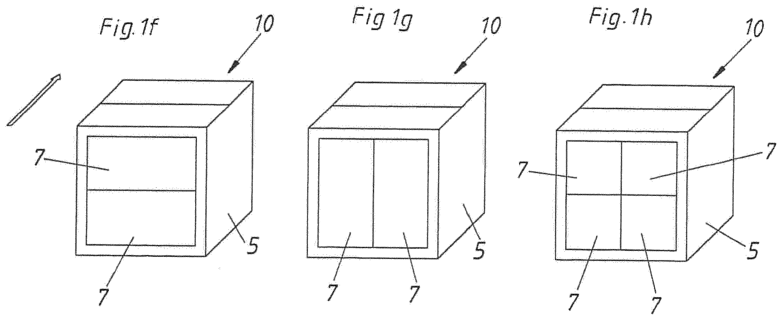

Das in Figur 1a dargestellte Reinigungsmodul 10 umfasst zunächst einen Hohlkörper 5, sowie eine Eintrittsöffnung 6 zum Eintritt des zu reinigenden Luftstroms. Da die Austrittsöffnung auf der Rückseite des Hohlkörpers 5 angeordnet ist, kann sie in diesen Darstellungen nicht erkannt werden. Die Austrittsöffnung ist im Wesentlichen analog zur Eintrittsöffnung 6 ausgebildet.

Der Hohlkörper 5 verfügt über - als Öffnungslaschen ausgebildete - Öffnungselemente 8. Diese sind in der vorliegenden Darstellung geöffnet, sodass der Blick aufs Innenleben des Hohlkörpers 5 frei wird. In Figur 1a sind mehrere Reinigungsteilstrukturen 7 dargestellt, welche in diesem Fall allesamt als Abscheidestrukturen 1 ausgebildet sind. Die Abscheidestrukturen 1 verfügen über Prallwände 2, welche mit Öffnungen 3 versehen sind. Der Übersichtlichkeit halber sind nicht alle Prallwände 2 und alle Öffnungen 3 mit Bezugszeichen versehen, da diese teilweise in einer Vielzahl vorliegen.

Figur 1b ist analog zu Figur 1a nur mit dem Unterschied, dass zwei der Reinigungsteilstrukturen 7 als Filterstrukturen 9 ausgebildet sind. Diese Filterstrukturen 9 umfassen Glasfasermatten oder Vliese, können aber auch Columbusmaterial oder ähnliches umfassen.

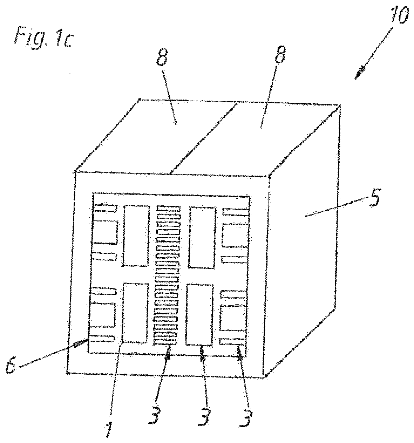

In Figur 1c ist erneut das Reinigungsmodul 10 dargestellt, dieses Mal jedoch mit geschlossenen Öffnungselementen 8. In diesem Zustand kann das Reinigungsmodul eingesetzt werden.

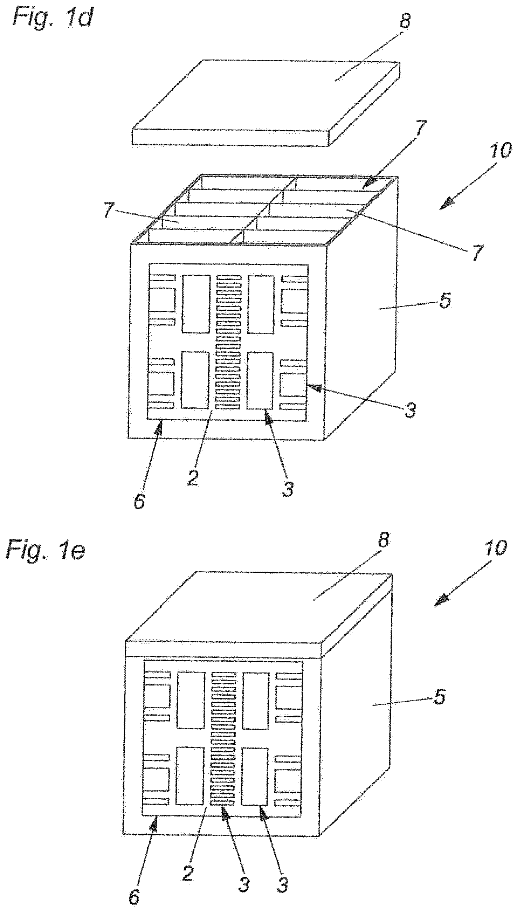

Die Öffnungselemente 8 können auch als abnehmbarer Deckel ausgeführt sein (schuhkartonartig), was in den Figuren 1d und 1e dargestellt ist. Ansonsten ist das Reinigungsmodul 10 aus den Figuren 1d und 1e analog zu denen aus den Figuren 1a bis 1c.

In den Figuren 1f bis 1h sind weitere Ausführungsformen dargestellt, wobei sich die Reinigungsteilstrukturen 7 in diesen Fällen nicht über die gesamte Querschnittsfläche (aus sicht des Luftstroms, welcher neben Figur 1f durch einen Pfeil angedeutet ist) des Hohlkörpers 5 erstrecken.

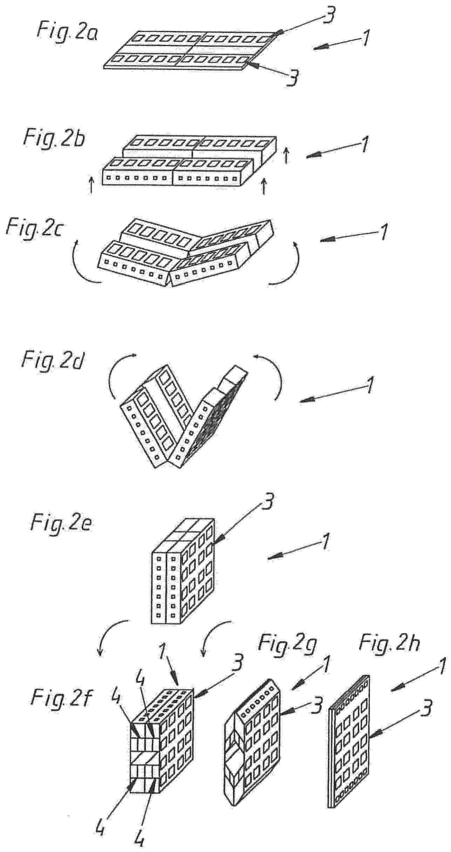

In den Figuren 2a bis 2h ist eine erste Ausführungsform einer erfindungsgemäßen Abscheidestruktur 1 in verschiedenen Faltzuständen dargestellt. Figur 2a zeigt dabei zunächst die Abscheidestruktur 1 im Auslieferungszustand. Teile der Struktur werden dann aufgefaltet (Figur 2b). Die gesamte Abscheidestruktur 1 wird danach noch einmal zusammengefaltet, wobei die in Figur 2b aufgefalteten Teile zueinander weisen.

Dann liegt die Abscheidestruktur 1 so vor, dass sie bei einem Reinigungsmodul 10 eingesetzt werden kann (Figur 2e). Figur 2f entspricht Figur 2e, wobei die Abscheidestruktur 1 gedreht dargestellt ist, was durch Pfeile verdeutlicht ist. Nach dem Gebrauch in einem Reinigungsmodul 10, beispielsweise beim Entsorgen des Reinigungsmoduls 10, kann die Abscheidestruktur 1 durch eine einzige Faltoperation (Figur 2g) im Wesentlichen flach gemacht werden (Figur 2h). Dies kann die Entsorgung vereinfachen.

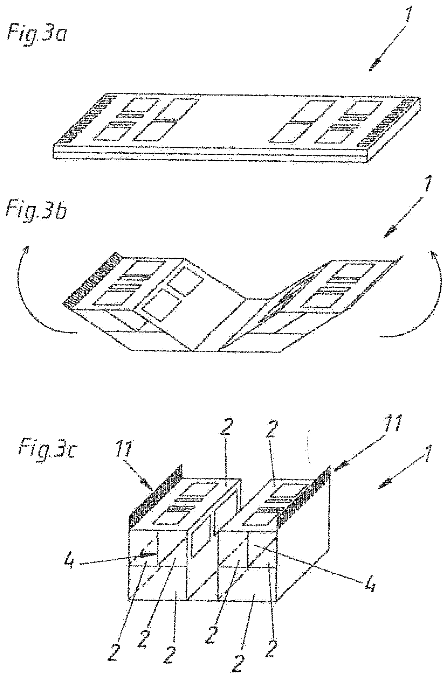

Die Figuren 3a bis 3c zeigen eine weitere erfindungsgemäße Abscheidestruktur 1. Diese kann aus dem Auslieferungszustand (Figur 3a) durch eine Faltoperation (Figur 3b), welche mit Pfeilen angedeutet ist, in den Betriebszustand versetzt werden (Figur 3c). An diesem Ausführungsbeispiel ist besonders deutlich die Anordnung der Stabilisierungswände 4 zwischen den Prallwänden 2 ersichtlich. Die Stabilisierungswände 4 sind im Wesentlichen mittig bezüglich einer Richtung in der Ebene der Prallwände 2 angeordnet. Zu erkennen sind ebenfalls Laschen 11, zwischen welchen einerseits weitere Abscheidestrukturen 1 angeordnet werden können - um Platz zu sparen - und welche andererseits als Abstandshalter fungieren können, sodass die Abscheidestruktur 1 fest im Reinigungsmodul 10 sitzt.

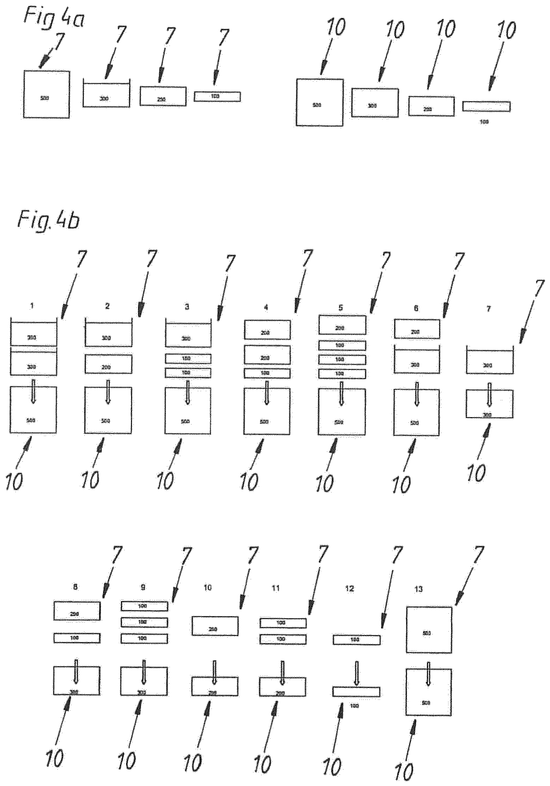

In den Figuren 4a und 4b sind schematisch Reinigungsteilstrukturen 7 verschiedener geometrischer Dimensionen, insbesondere Stärke, sowie verschiedene Kombinationen ihrer Anordnung in einem Reinigungsmodul 10 dargestellt. Die Reinigungsteilstrukturen 7 sind in dieser Ausführung in drei verschiednen Stärken von 100 mm, 200 mm, 300 mm oder 500 mm vorgesehen, wobei die Stärken jeweils auf den Reinigungsteilstrukturen 7 vermerkt sind. Ähnlich gibt es Reinigungsmodule 10 in verschiedenen Ausführungsformen, welche sich durch die Gesamtstärke an Reinigungsteilstrukturen 7, welche sie in der Lage sind aufzunehmen, unterscheiden. Auch hier sind die verschiedenen Gesamtstärken 100 mm, 200 mm, 300 mm oder 500 mm auf den Reinigungsmodulen 10 vermerkt.

In Figur 4b sind einige verschiedene Kombinationsmöglichkeiten dargestellt, welche durchnummeriert sind. Bei den Ausführungen 1 bis 6 dient jeweils ein Reinigungsmodul 10, welches Reinigungsteilstrukturen 7 mit einer Gesamtstärke von 500 mm aufnehmen können. Bei den Ausführungen 7 bis 9 nimmt das Reinigungsmodul 10 Reinigungsteilstrukturen mit Gesamtstärke von 300 mm auf. Die Ausführungen 10 und 11 betreffen Reinigungsmodule 10 mit 200 mm Gesamtstärke. Ausführungsform 12 betrifft ein Reinigungsmodul mit 100 mm Gesamtstärke. Ausführungsform 13 betrifft ein Reinigungsmodul mit 500 mm Gesamtstärke Die verschiedenen Kombinationsmöglichkeiten sind daraus ersichtlich.

Zu bemerken ist, dass die Reinigungsteilstruktur 7, welche 300 mm stark ist, über Laschen 11 verfügt. Der Übersichtlichkeit halber sind nicht alle Laschen 11 mit Bezugszeichen versehen. Dadurch kann diese als Abscheidestruktur 1 ausgeführte Reinigungsteilstruktur 7 als Reinigungsteilstruktur 7 mit Stärke 300 mm (Ausführungsformen 6 und 7 in Figur 4b) oder mit Stärke 200 mm (Ausführungsform 1 aus Figur 4b) dienen.

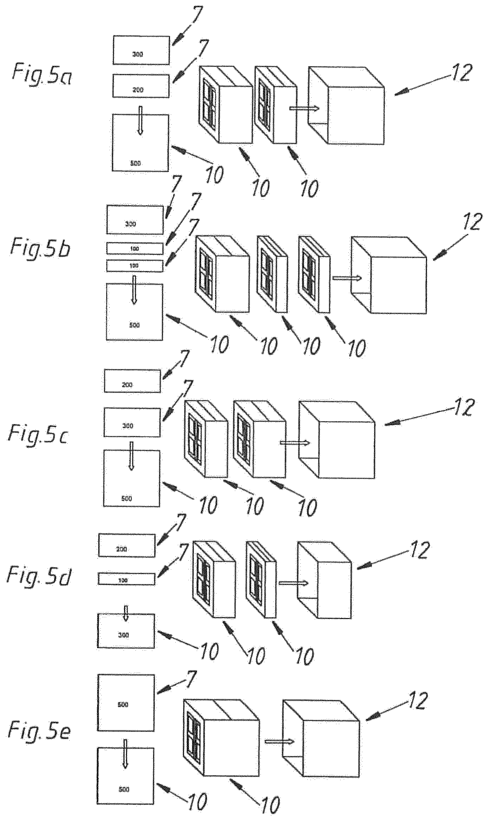

Erfindungsgemäße Reinigungsmodule 10 können hintereinander in Einschubrahmen 12 angeordnet werden. Auch hier sind verschiedene Kombinationen möglich was zum einen schematisch (links) und zum anderen perspektivisch (rechts) jeweils in den Figuren 5a bis 5e dargestellt ist. Bevorzugt werden Reinigungsmodule 10, welche auf gröbere Lackverunreinigungen bzw. Lacktröpfchen optimiert sind dem verunreinigten Luftstrom zugewandt angeordnet. Diese können dann einzeln gewechselt werden. Diejenigen Reinigungsmodule 10, welche ihre Kapazitätsgrenze später erreichen, können länger in den Einschubrahmen 12 verweilen.

## Patentansprüche

1. Set aus einem Hohlkörper (5), welcher eine Eintrittsöffnung (6) für den Eintritt eines zu reinigenden Luftstroms und eine Austrittsöffnung für den Austritt des gereinigten Luftstroms aufweist, sowie mehreren Reinigungsteilstrukturen (7) zur Reinigung des Luftstroms durch Abscheidung von Partikeln und/oder zur Filtration des Luftstroms, welche Reinigungsteilstrukturen Abscheidestrukturen (1) zur Reinigung eines Luftstroms beinhalten, wobei die Abscheidestrukturen (1) wenigstens zwei, in Richtung des Luftstroms aufeinanderfolgende Prallwände (2), welche mit Öffnungen (3) versehen sind, umfasst, wobei die Reinigungsteilstrukturen (7) in Richtung des Luftstroms im Hohlkörper (5) hintereinander anordenbar sind,
**dadurch gekennzeichnet, dass**
zumindest zwei verschiedene Kombinationen von Reinigungsteilstrukturen (7) im Hohlkörper (5) anordenbar sind, dass die Abscheidestrukturen (1) durch die Größe der Öffnungen (3) auf die Abscheidung von Partikeln unterschiedlicher Größe abgestimmt sind und dass die Abscheidestrukturen (1) in verschiedenen Stärken (100, 200, 300) vorgesehen sind.

2. . Set nach Anspruch 1, **dadurch gekennzeichnet, dass** die wenigstens zwei Reinigungsteilstrukturen (7) eine Filterstruktur (9) umfassen.

3. . Set nach einem der Ansprüche 1 oder 2, **dadurch gekennzeichnet, dass** der Hohlkörper (5) im Wesentlichen quaderförmig ist.

4. . Set nach einem der Ansprüche 1 bis 3, **dadurch gekennzeichnet, dass** die Reinigungsteilstrukturen (7) in einer Ansicht entlang einer Achse, welche beim im Hohlkörper (5) angeordneten Zustand, im Wesentlichen parallel zum Luftstrom ist, einen Umriss aufweisen, welcher einem, vorzugsweise zum Luftstrom senkrechten, Querschnitt eines Hohlraums des Hohlkörpers (5) im Wesentlichen entspricht.

5. . Set nach einem der Ansprüche 1 bis 4, **dadurch gekennzeichnet, dass** zwischen den wenigstens zwei Prallwänden (2) wenigstens eine quer zu den Prallwänden (2) ausgerichtete Stabilisierungswand (4) angeordnet ist.

6. . Set nach einem der Ansprüche 1 bis 5, **dadurch gekennzeichnet, dass** die zumindest eine Abscheidestruktur (1) zusammenfaltbar ist.

7. . Set nach Anspruch 6, **dadurch gekennzeichnet, dass** die zumindest eine Abscheidestruktur (1) nach dem Zusammenfalten im Wesentlichen flach ist.

8. . Set nach Anspruch 6 oder 7, **dadurch gekennzeichnet, dass** das Zusammenfalten der Abscheidestruktur (1) beim im Hohlkörper (5) angeordneten Zustand durch Innenwandungen des Hohlkörpers (5) gehemmt ist.

9. . Set nach einem der Ansprüche 1 bis 8, **dadurch gekennzeichnet, dass** zumindest eine Abscheidestruktur (1) quer zu einer Richtung des Luftstroms versetzte und/oder entlang der Richtung des Luftstroms in ihrer Größe unterschiedliche Öffnungen (3) aufweist.

10. . Set nach einem der Ansprüche 1 bis 9, **dadurch gekennzeichnet, dass** zumindest eine Abscheidestruktur (1) wenigstens zwei im Wesentlichen parallel zum Luftstrom ausgerichtete Laschen (11) aufweist, zwischen denen im Hohlkörper eine weitere Abscheidestruktur (1) anordenbar ist.

11. . Set nach einem der Ansprüche 1 bis 10, **dadurch gekennzeichnet, dass** der Hohlkörper (5) und/oder zumindest eine Abscheidestruktur (1) aus Karton, Papier oder Pappe besteht.

12. . Set nach einem der Ansprüche 1 bis 11, **dadurch gekennzeichnet, dass** die Reinigungsteilstrukturen (7) über ein Öffnungselement (8) am Hohlkörper (5) aus dem Hohlkörper (5) entnehmbar und/oder im Hohlkörper (5) anordenbar ist.

## Claims

1. Set made of a hollow body (5) which comprises an inlet opening (6) for the entry of an air stream to be purified and an outlet opening for the outlet of the purified air stream, and multiple purifying substructures (7) for purifying the air stream by a deposition of particles and/or for a filtration of the airstream, which purifying substructures include deposition structures (1) for purifying an airstream, wherein the deposition structures (1) encompass at least two impact walls (2) which are successive in the direction of the airstream, which are provided with openings (3), wherein the purifying substructures (7) are successively arrangeable in the hollow body (5) in the direction of the airstream,
**characterized in**
**that** at least two different combinations of purifying substructures (7) are arrangeable in the hollow body (5), that the deposition structures (1), by the size of the openings (3), are matched to the deposition of particles of a different size, and that the deposition structures (1) are provided in different thicknesses (100, 200, 300).

2. Set according to claim 1, **characterized in that** the at least two purifying substructures (7) encompass a filter structure (9).

3. Set according to one of the claims 1 or 2, **characterized in that** the hollow body (5) is substantially cuboid.

4. Set according to one of the claims 1 to 3, **characterized in that** the purifying substructures (7), in a view along an axis which is substantially parallel to the airstream in a state arranged in the hollow body (5), comprise an outline which substantially corresponds to a cross section of a hollow space of the hollow body (5) which is preferably perpendicular to the airstream.

5. Set according to one of the claims 1 to 4, **characterized in that** between the at least two impact walls (2) at least one stabilization wall (4) is arranged which is aligned transversely to the impact walls (2).

6. Set according to one of the claims 1 to 5, **characterized in that** the at least one deposition structure (1) is foldable.

7. Set according to claim 6, **characterized in that** the at least one deposition structure (1) is substantially flat after folding.

8. Set according to claim 6 or 7, **characterized in that** folding the deposition structure (1), in a state arranged in the hollow body (5), is inhibited by inner walls of the hollow body (5).

9. Set according to one of the claims 1 to 8, **characterized in that** at least one deposition structure (1) comprises openings (3) which are offset transversely to a direction of the airstream and/or which are different in their size along the direction of the airstream.

10. Set according to one of the claims 1 to 9, **characterized in that** at least one deposition structure (1) comprises at least two flaps (11) which are substantially aligned in parallel to the airstream, between which a further deposition structure (1) is arrangeable in the hollow body.

11. Set according to one of the claims 1 to 10, **characterized in that** the hollow body (5) and/or at least one deposition structure (1) consists of cardboard, paper, or paperboard.

12. Set according to one of the claims 1 to 11, **characterized in that** the purifying substructures (7) are removable out of the hollow body (5) via an opening element (8) at the hollow body and/or are arrangeable in the hollow body (5).

## Revendications

1. Ensemble constitué d'un corps creux (5) qui présente une ouverture d'entrée (6) pour l'entrée d'un flux d'air à purifier et une ouverture de sortie pour la sortie du flux d'air purifié, ainsi que plusieurs structures (7) de purification partielle pour la purification du flux d'air par séparation de particules et/ou pour la filtration du flux d'air, lesquelles structures de purification partielle contiennent des structures de séparation (1) pour la purification d'un flux d'air, les structures de séparation (1) comprenant au moins deux parois d'impact (2) qui se succèdent dans la direction du flux d'air et qui sont pourvues d'ouvertures (3), les structures (7) de purification partielle étant aptes à être disposées les unes derrière les autres dans la direction du flux d'air dans le corps creux (5),
**caractérisé en ce que**
au moins deux combinaisons différentes de structures (7) de purification partielle sont aptes à être disposées dans le corps creux (5), **en ce que** les structures de séparation (1) sont adaptées, par la taille des ouvertures (3), à la séparation de particules de tailles différentes, et **en ce que** les structures de séparation (1) sont prévues en différentes épaisseurs (100, 200, 300).

2. Ensemble selon la revendication 1, **caractérisé en ce que** lesdites au moins deux structures (7) de purification partielle comprennent une structure de filtre (9).

3. Ensemble selon l'une des revendications 1 ou 2, **caractérisé en ce que** le corps creux (5) est sensiblement parallélépipédique.

4. Ensemble selon l'une des revendications 1 à 3, **caractérisé en ce que** les structures (7) de purification partielle présentent, vues le long d'un axe qui, à l'état disposé dans le corps creux (5), est sensiblement parallèle au flux d'air, un contour qui correspond sensiblement à une section transversale, de préférence perpendiculaire au flux d'air, d'une cavité du corps creux (5).

5. Ensemble selon l'une des revendications 1 à 4, **caractérisé en ce qu'**entre lesdites au moins deux parois d'impact (2) est disposée au moins une paroi de stabilisation (4) orientée transversalement par rapport aux parois d'impact (2).

6. Ensemble selon l'une des revendications 1 à 5, **caractérisé en ce que** ladite au moins une structure de séparation (1) est repliable.

7. Ensemble selon la revendication 6, **caractérisé en ce que** ladite au moins une structure de séparation (1) est sensiblement plate après repliage.

8. Ensemble selon la revendication 6 ou la revendication 7, **caractérisé en ce que** le repliage de la structure de séparation (1), lorsqu'elle est placée dans le corps creux (5), est inhibé par des parois internes du corps creux (5).

9. Ensemble selon l'une des revendications 1 à 8, **caractérisé en ce qu'**au moins une structure de séparation (1) présente des ouvertures (3) décalées transversalement par rapport à une direction du flux d'air et/ou de tailles différentes le long de la direction du flux d'air.

10. Ensemble selon l'une des revendications 1 à 9, **caractérisé en ce qu'**au moins une structure de séparation (1) présente au moins deux pattes (11) orientées sensiblement parallèlement au flux d'air, entre lesquelles une autre structure de séparation (1) est apte à être disposée dans le corps creux.

11. Ensemble selon l'une des revendications 1 à 10, **caractérisé en ce que** le corps creux (5) et/ou au moins une structure de séparation (1) est en carton, en papier ou en papier cartonné.

12. Ensemble selon l'une des revendications 1 à 11, **caractérisé en ce que** les structures (7) de purification partielle sont aptes à être retirées du corps creux (5) et/ou disposées dans le corps creux (5) par l'intermédiaire d'un élément d'ouverture (8) sur le corps creux (5).
